Europäisches Patentamt

European Patent Office

Office européen des brevets

(11) Publication number: **0 006 238**
**B1**

(12) **EUROPEAN PATENT SPECIFICATION**

(45) Date of publication of patent specification: **23.09.81**

(51) Int. Cl.³: **G 11 B 23/04, G 11 B 23/08**

(21) Application number: **79102000.1**

(22) Date of filing: **18.06.79**

(54) Magnetic recording tape cartridge.

(30) Priority: **20.06.78 JP 85995/78**

(43) Date of publication of application:
**09.01.80 Bulletin 80/1**

(45) Publication of the grant of the European patent:
**23.09.81 Bulletin 81/38**

(84) Designated Contracting States:
**DE FR GB**

(56) References cited:
**FR - A - 2 144 215**
**US - A - 3 529 788**
**US - A - 4 011 593**

(73) Proprietor: **Hitachi Maxell Ltd.**
**No 1-1-88, Ushitora Ibaraki-shi**
**Osaka-fu (JP)**

(72) Inventor: **Kagano, Shinichi**
**No. 5-10, Koaza Sannoumae Aza Shimoueno**
**Ooyamazaki-cho, Otokuni-gun, Kyoto-fu (JP)**

(74) Representative: **Selting, Günther, Dipl.-Ing. et al,**
**Deichmannhaus am Hauptbahnhof**
**D-5000 Köln 1 (DE)**

Courier Press, Leamington Spa, England.

## Magnetic recording tape cartridge

The present invention relates to a magnetic recording tape cartridge comprising

a bottom case and a top case assembled together by fastening means for providing a tape chamber with a plurality of openings on the front side of the chamber;

a magnetic recording tape wound around a pair of reels rotatably mounted in the chamber, the intermediate portion of the recording tape being stretched between the reels running along a predetermined path defined along the openings;

a pair of tape guide pins protruding from the bottom case at the respective positions adjacent to both the sides of one of the openings to which a recording head of a tape player is inserted;

a magnetic shielding plate having a generally elongated portion with both ends thereof bent perpendicularly to the elongated portion and the plate being disposed in an inner part of the tape chamber, the plate's elongated portion extending in parallel with said tape path so as to face the recording head insertion opening, each bent end of the magnetic shielding plate being mounted on respective base pieces, the two base pieces having predetermined length and protruding from the base at opposite sides of the recording head insertion opening;

a pad device composed of an elongated resilient plate and a cushioning block fixed to the center portion of the resilient plate, said resilient plate of the pad device being so inserted in the corresponding space defined by the magnetic shielding plate and the corresponding tape guide pin that the pad device is disposed in parallel with the magnetic shielding plate, said pad device being mounted on the corresponding base pieces;

a pair of first ribs provided at least on the bottom case at both sides of the recording head insertion opening and having front portions for regulating the height of the magnetic recording tape by slidably supporting the lower edge of the magnetic recording tape.

U.S. patent 3,529,788 discloses an example of a recording tape cartridge provided with a magnetic shielding plate and a pad device.

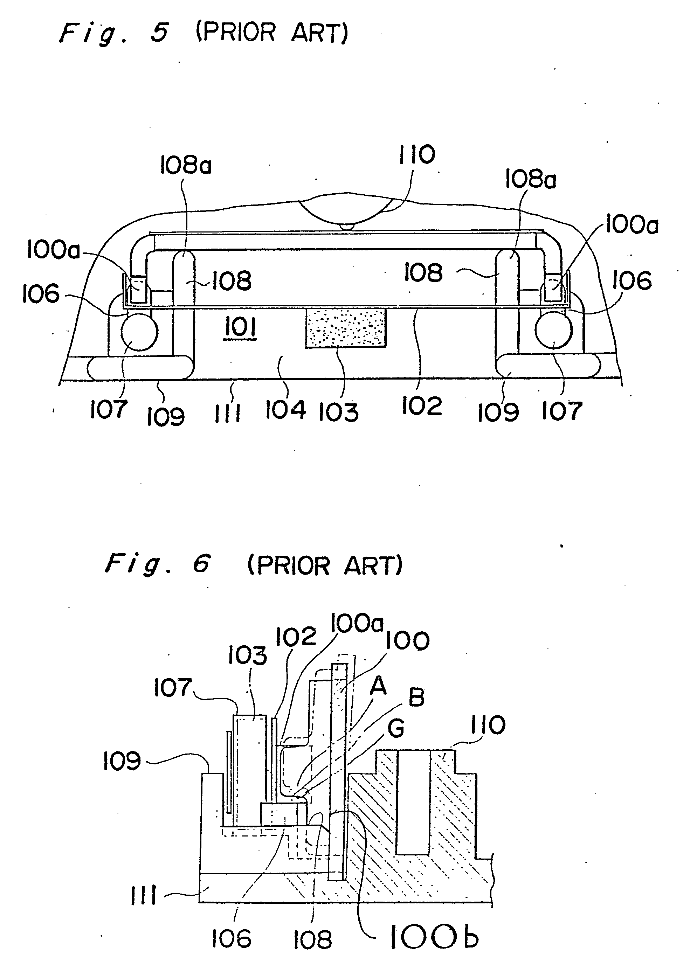

Detailed construction of essential portions of the conventional magnetic recording tape cartridge of the prior art as mentioned above is illustrated in Fig. 5 and Fig. 6, wherein a magnetic shielding plate 100 and a pad device 101 composed of a resilient plate 102 and a cubic cushioning pad 103 are disposed in parallel facing an opening 104 defined in front wall 109 of the cartridge 105 for receiving a magnetic head (not shown) of a tape recorder.

In a process of making a cartridge commercially, the magnetic shielding plate 100 is installed by mounting its bent ends 100a on a pair of base pieces 106 protruding from tape guiding pins 107 and the plate 100 is clamped by backward ends 108a of a pair of ribs 108 extending in a backward direction from the front wall 109 and a boss 110.

After installation of the plate 100, the pad device 101 is installed relative to said base pieces 106 by inserting both end portions of the resilient plate 102 within the gaps defined by the guide pins 107 and both bent ends 100a of the plate 100.

Under such a situation, during the process of installation of these elements, if the magnetic shielding plate 100 shifts upward even to a slight degree due to vibration or shock of intermittent movements of a conveyer by which respective cartridges are transferred, the gap G between the rear end faces of the base pieces 106 and the front face 100b of the magnetic shielding plate 100 is enlarged as shown by the chain lines A in Fig. 6 and the plate 102 of the pad device 101, which is originally apt to be inclined in a forward direction, falls into said gap G as shown by the chain lines B with the result that the procedure of installation of these elements into the cartridges must be stopped.

The above mentioned magnetic shielding plate 100 which is inserted in the receiving groove formed on the lower case 111 with some play is apt to move idly in both the forward or backward directions and in the lateral directions. Therefore, such lateral movement, i.e., leftward and rightward directions of the magnetic shielding plate 100, is apt to cause such problems that the pad device 101 is displaced out of the guide pins 107, resulting in failure of exertion of the required contact pressure on the recording tape and the recording head.

It is, therefore, an essential object of the present invention to provide a magnetic recording tape cartridge which is capable of holding the pad device and the magnetic shielding plate in the required positions, even in case of vibrations or shocks acting on the cassette.

In order to achieve such object according to the present invention, the magnetic recording tape cartridge of the kind mentioned is characterized in that there is provided a pair of second ribs adjacent to each of the base pieces, each of the second ribs having a height not higher than the upper surface of the base pieces and higher than the upper surface of the first ribs and each of the second ribs extending from at least a position situated frontwardly of the backward ends of the base pieces to at least a position adjacent to the front edge of the magnetic shielding plate.

An advantage of the cartridge of the present invention is that it is readily adaptable to the installation of the pad device and the magnetic shielding plate in the respective given positions relative to the cartridge.

These and other objects and features of the present invention will be apparent from the description made hereinafter in conjunction with a preferred embodiment of the present invention with reference to the attached drawings.

Fig. 1 is a partially cut out plan view of an embodiment of a magnetic recording tape cartridge according to the present invention,

Fig. 2 is an enlarged plan view showing an essential portion of the magnetic recording tape cartridge shown in Fig. 1,

Fig. 3 is a cross sectional view taken along the line III-III in Fig. 2,

Fig. 4 is a cross sectional view taken along the line IV-IV in Fig. 3,

Fig. 5 is an enlarged plan view of an essential portion of a conventional magnetic recording tape cartridge, and

Fig. 6 is a vertical sectional side view of the magnetic recording tape cartridge shown in Fig. 5.

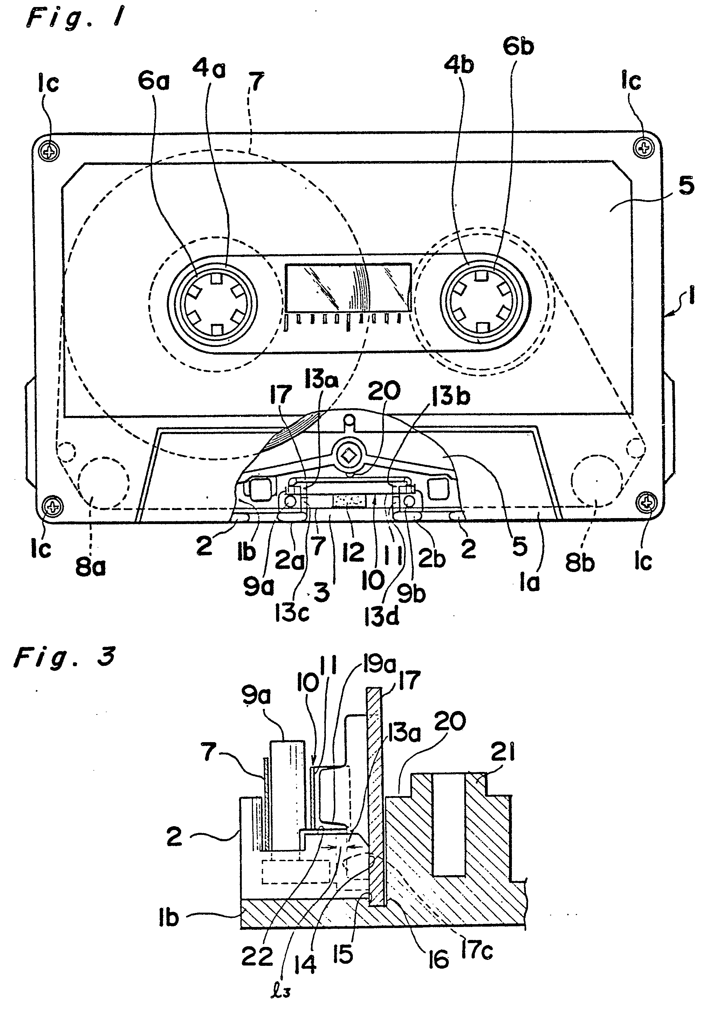

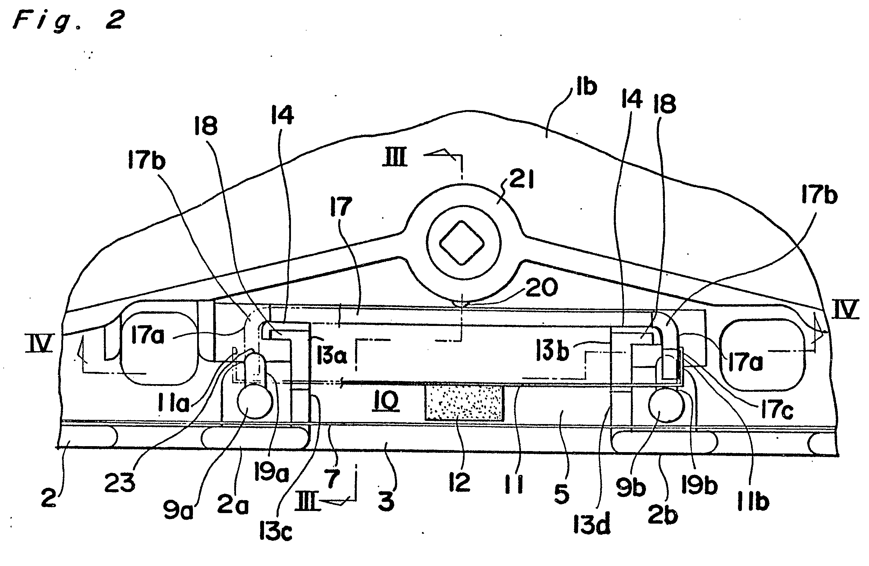

Referring to Fig. 1 through Fig. 4, there is shown a magnetic recording tape cartridge 1 of so called Philips type "Compact cassete" composed of a bottom case 1b and a top case 1a, each case being made of plastic materials such as a polystyrene resin. Each of the cases 1a and 1b includes front walls 2 with a plurality of openings including a central opening 3 for insertion of a recording head of a tape recorder (not shown), a pair of side walls, a rear wall and a pair of holes 4a and 4b defined on the bottom plate 5 of each of the cases. Both cases 1a and 1b are assembled to provide a tape chamber and tightened together by means of screws 1c passed through the bottom plate of the top case 1a and being threadingly engaged in respective screw inserting holes (not shown) provided on the respective corners of the bottom case 1b in a well known manner.

A pair of reels 6a and 6b is rotatably mounted within the tape chamber of the cartridge 1 being engaged in the insertion holes, and a magnetic recording tape 7 is wound on the reels 6a and 6b, the intermediate portion of the recording tape 7 is stretched between a pair of guide rollers 8a and 8b and is passed through the predetermined path defined along the front wall 2. Upon rotation of the reels 6a and 6b, the recording tape pack on one of the reels is released therefrom and in turn is taken up by the other reel in a known manner.

Opposing to the central opening 3 for insertion of the magnetic recording head, there is provided a pad device 10 composed of a resilient plate 11 and a small cushioning block 12 made of a felt or a synthetic foam material fitted at the intermediate portion of the plate 11, in order to ensure that the recording tape 7 contacts the recording head with suitable pressure during the recording or playing back of the magnetic recording cartridge by a player.

The resilient plate 11 is formed by means of, for example, a punch press from phosphor bronze with its two ends bent toward the backside of the case. It has a thickness of about 80$\mu$ and a width of about 2·5mm.

Adjacent to the respective front wall pieces 2a and 2b which define the central opening 3, there are disposed a pair of tape guide pins 9a and 9b by which the recording tape 7 is guided to pass the predetermined path along the front wall.

From each of the tape guide pins 9a and 9b, base pieces 19a and 19b are projected in a backward direction for supporting the respective end portions of the resilient plate 11 of the pad device 10 on its flat upper surface.

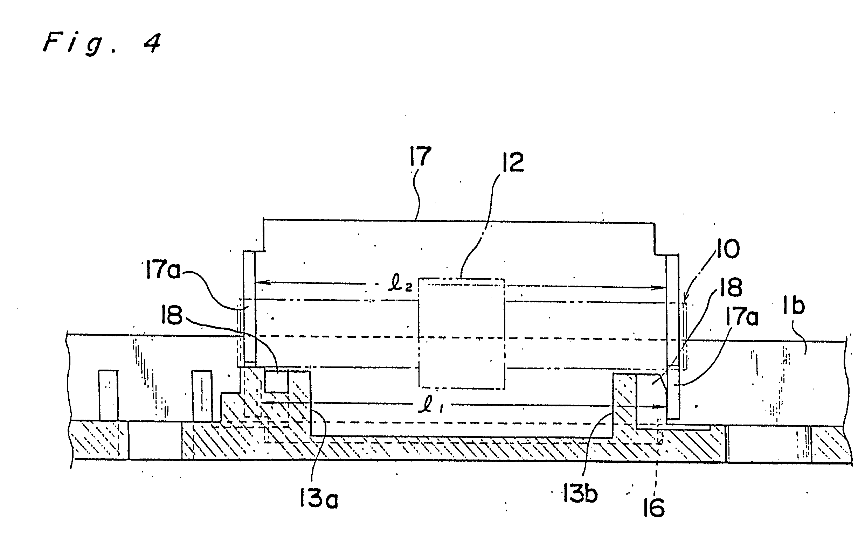

A pair of ribs 13a and 13b with a generally "L" configuration in plan view are symmetrically protruded from the bottom plate 5 of the bottom case 1b, extending from the inner end portion of the respective wall pieces 2a and 2b in a backward direction beyond the base pieces 19a and 19b and terminating with a vertical rear end face 14 at a position coinciding with the front inside face 15 of a laterally elongated slot 16 in which a bottom portion of a magnetic shielding plate of permalloy 17 is fitted as shown in Fig. 3.

The bent legs 18 of each of the pair of ribs 13a and 13b are protruded outwardly and laterally and are adapted to terminate at the respective positions adjacent to respective base pieces 19a and 19b. The respective upper corners of the bent legs 18 are shaped in the form of a wedge so as to facilitate insertion of the magnetic shielding plate 17 into the slot 16.

As shown best in Fig. 3, the first ribs 13c and 13d are considerably lower in height than the upper surface of the base pieces 19a and 19b, so that the upper surface can be in contact with the lower edge of the magnetic recording tape 7 to regulate the recording tape 7 in a proper position. However, the upper surface 22 of the rearward second ribs 13a and 13b is raised so as to become flush with or slightly lower than the upper surfaces of the base pieces 19a and 19b so as to allow the resilient plate 11 to be bent when the plate 11 is pushed in the backward direction upon insertion of the magnetic recording head.

According to the present invention the magnetic shielding plate 17 is installed in the cartridge 1 in such a manner that both bent corners 17b of the magnetic shielding plate 17 are engaged with the ends of the respective bent legs 18 of the ribs 13a and 13b, fitting the bottom portion of the magnetic shielding plate 17 within the elongated slot 16 as shown in Fig. 3.

Since the front face of the lower portion of the magnetic shielding plate 17 contacts or opposes closely to the vertical rear end surfaces 14 of the respective ribs 13a and 13b, while the rear face of the magnetic shielding plate 17 opposes closely to the projection 20 projected from the boss 21, the magnetic shielding plate 17 is supported by the first ribs 13c, 13d and the projection 20 so as to stand vertically.

Furthermore, since both corners of the magnetic shielding plate 17 are engaged with both ends of the leg portions 18, the magnetic shielding plate 17 is readily mounted in a correct position.

After the magnetic shielding plate 17 is mounted as mentioned above, the pad device 10 is mounted in parallel with and in front of the magnetic shielding plate 17 in such a manner that the legs 11a and 11b of the resilient plate 11 are situated outwardly of both of the legs 17a and 17b of the magnetic shielding plate 17, and the lower edge of the resilient plate 11 contacts the upper surface of the respective base pieces 19a and 19b at both end portions of the resilient plate 11 closely facing the upper surface of the respective second ribs 13a and 13b. By this construction, during installation of the pad relative to the base pieces 19a and 19b in the process of making the recording tape cartridge, even if the magnetic shielding plate 17 is accidentally shifted upward due to vibration or shock caused by a conveyer carrying the cartridge, and if there occurs a possible gap between the front end face of the leg 17a of the magnetic shielding plate 17 and the base pieces 19a or 19b, the resilient plate 11 is effectively prevented from falling into the gap since the resilient plate 11 is supported by the higher upper face 22 of the second ribs 13a and/or 13b.

Accordingly, the pad device 10 can at all times be properly and readily utilized to correct such deficiencies and the efficiency of the commercial production of cartridge can be much improved.

According to the present invention, the front side portion and rear side portion of each of ribs 13a and 13b may be separated into two pieces wherein one piece serves to regulate the level of the magnetic recording tape 7 and other piece supports the resilient plate 11. In this case, it is required that each of the second ribs 13a and 13b is of such a length $l_3$ that their starting ends are positioned ahead of the backward end 23 of the base pieces 19a and 19b toward the front of the case and at least their rear ends are positioned adjacent to the front edge 17c of the magnetic shielding plate 17.

Alternatively, when the second ribs 13a and 13b extend to the vicinity of the slot 16 for receiving the magnetic shielding plate 17, and they are bent to the lateral external sides to form the bent portions 18 and the distance $l_1$ between the two ends of these bent legs 18 is made nearly equal to the distance $l_2$ between the bent pieces 17a of the magnetic shield 17, displacement of the magnetic shield 17 in the lateral direction is restricted so that the bent pieces 17a are always positioned on the base pieces 19a and 19b. As a result, the pad device 10 is held in a correct position by means of the guide pins 9 and the two end bent pieces 17a of the magnetic shielding plate 17.

When a wedged surface of the bent legs 18 is formed with an angle between about 30 to 45 degrees relative to the vertical plane, the magnetic shielding plate 17 can be readily installed relative to the base pieces 19a and 19b in a downward direction.

In the above embodiment, the slot 16 for mounting the magnetic shield 1 may be omitted. Furthermore, the bent legs 18 of the second rib 13a or 13b may extend to the corner of the bent portion 17a of the magnetic shielding plate 17 from the ribs 13a or 13b with a slant angle relative to the rib.

The invention being thus described, it will be obvious that the same may be varied in many ways. Such variations are not to be regarded as a departure from the scope of the invention, and all such modifications are intended to be included within the scope of the following claims.

**Claims**

1. Magnetic recording tape cartridge comprising
   a bottom case (1b) and a top case (1a) assembled together by fastening means (1c) for providing a tape chamber with a plurality of openings on the front side of the chamber;
   a magnetic recording tape (7) wound around a pair of reels (6a, 6b) rotatably mounted in the chamber, the intermediate portion of the recording tape (7) being stretched between the reels (8a, 8b) running along a predetermined path defined along the openings;
   a pair of tape guide pins (9a, 9b) protruding from the bottom case (1b) at the respective positions adjacent to both the sides of one (3) of the openings to which a recording head of a tape player is inserted;
   a magnetic shielding plate (17) having a generally elongated portion with both ends (17a, 17b) thereof bent perpendicularly to the elongated portion and the plate (17) being disposed in an inner part of the tape chamber, the plate's elongated portion extending in parallel with said tape path so as to face the recording head insertion opening (3), each bent end (17a, 17b) of the magnetic shielding plate (17) being mounted on respective base pieces (19a, 19b), the two base pieces having predetermined length and protruding from the base at opposite sides of the recording head insertion opening (3);
   a pad device (10) composed of an elongated resilient plate (11) and a cushioning block (12) fixed to the center portion of the resilient plate (11), said resilient plate (11) of the pad device (10) being so inserted in the corresponding space defined by the magnetic shielding plate (17) and the corresponding tape guide pin (9a, 9b) that the pad device (10) is disposed in parallel with the magnetic shielding plate (17), said pad device (10) being mounted on the corresponding base pieces,

a pair of first ribs (13c, 13d) provided at least on the bottom case at both sides of the recording head insertion opening (3) and having front portions for regulating the height of the magnetic recording tape (7) by slidably supporting the lower edge of the magnetic recording tape;

characterized in that there is provided a pair of second ribs (13a, 13b) adjacent to each of the base pieces (19a, 19b), each of the second ribs (13a, 13b) having a height not higher than the upper surface of the base pieces (19a, 19b) and higher than the upper surface of the first ribs (13c, 13d) and each of the second ribs (13a, 13b) extending from at least a position situated frontwardly of the backward ends of the base pieces (19a, 19b) to at least a position adjacent to the front edge of the magnetic shielding plate (17).

2. Magnetic recording tape cartridge according to claim 1 wherein each of the second ribs (13a, 13b) is formed integrally with the corresponding first rib for regulating the level of the recording tape (7) running along said path.

3. Magnetic recording tape cartridge according to claim 2, wherein each of the second ribs (13a, 13b) is provided with a bent portion (18) extending outwardly in such a manner that the distance ($l_1$) between the outward ends of each of the bent portions (18) is substantially equal to the distance ($l_2$) between both bent ends (17a) of the magnetic shielding plate (17).

4. Magnetic recording tape cartridge according to claim 3, wherein each of the combination of a second rib (13a, 13b) and a bent portion (18) is formed with generally 'L' configuration.

5. Magnetic recording tape cartridge according to claim 3, wherein the second ribs (13a, 13b) and the bent portions (18) are formed with wedged portions at their upper corners.

## Patentansprüche

1. Magnetbandkassette, enthaltend ein unteres Gehäuse (1b) und ein oberes Gehäuse (1a), die zur Bildung einer Bandkammer mit mehreren Öffnungen an der Kammervorderseite mit Befestigungsmitteln (1c) zusammengebaut sind;

ein Magnetband (7), das um ein Paar (6a, 6b) drehbar in der Kammer montierter Spulen gewickelt ist, wobei der Zwischenbereich des Magnetbandes (7) zwischen den Spulen gestreckt entlang einer zwischen den Öffnungen gebildeten vorbestimmten Bahn läuft;

ein Paar von dem unteren Gehäuse (1b) abstehender Bandführungszapfen (9a, 9b), die an den jeweiligen Positionen neben beiden Seiten einer (3) der Öffnungen angeordnet sind, in die der Aufzeichnungskopf eines Magnetbandgerätes eingesetzt wird;

eine magnetische Abschirmplatte (17) mit einem in wesentlichen langgestreckten Abschnitt, deren beide Enden (17a, 17b) rechtwinklig zu dem langgestreckten Abschnitt und der Platte (17) in einem inneren Teil der Bandkammer angeordnet sind, wobei der langgestreckte Abschnitt der Platte parallel zu dem Bandweg verläuft, so daß er der Einschuböffnung (3) für den Aufzeichnungskopf zugewandt ist, wobei jedes abgebogene Ende (17a, 17b) der magnetischen Abschirmplatte (17) an zugehörigen Basisstücken (19a, 19b) befestigt ist und die beiden Basisstücke bestimmte Längen haben und von der Basis nach entgegengesetzten Seiten der Einschuböffnung (3) für den Aufzeichnungskopf abstehen;

eine aus einer länglichen federnden Platte (11) und einem am Mittelabschnitt der federnden Platte (11) befestigten Kissenblock (12) bestehende Kissenvorrichtung (10), wobei die federnde Platte (11) der Kissenvorrichtung (10) so in den von der magnetischen Abschirmplatte (17) und dem entsprechenden Bandführungszapfen (9a, 9b) gebildeten Raum eingesetzt ist, daß die Kissenvorrichtung (10) parallel zur magnetischen Abschirmplatte (17) angeordnet ist und die Kissenvorrichtung (10) an den entsprechenden Basisstücken befestigt ist;

ein Paar an mindestens dem unteren Gehäuse zu beiden Seiten der Einschuböffnung (3) für den Aufzeichnungskopf vorgesehener erster Rippen (13c und 13d), die Vorderteile zur Regulierung der Höhe des Magnetbandes (7) durch gleitende Abstützung der Unterkante des Magnetbandes aufweisen;

dadurch gekennzeichnet, daß jedem der Basisstücke (19a, 19b) benachbart eine Rippe von einem Paar zweiter Rippen (13a, 13b) angeordnet ist, daß jede der zweiten Rippen (13a, 13b) eine Höhe hat, die nicht größer ist als die Oberseite der Basisstücke (19a, 19b) und größer als die Oberseite der ersten Rippen (13c, 13d), und daß jede der zweiten Rippen (13a, 13b) sich mindestens von einer vor den rückwärtigen Enden der Basisstücke (19a, 19b) liegenden Stelle bis zu einer mindestens in der Nähe der Vorderkante der magnetischen Abschirmplatte (17) liegenden Stelle erstreckt.

2. Magnetbandkassette nach Anspruch 1, wobei jede der zweiten Rippen (13a, 13b) zur Regulierung der Höhe des den Weg durchlaufenden Magnetbandes (7) einstückig mit der entsprechenden ersten Rippe geformt ist.

3. Magnetbandkassette nach Anspruch 2, dadurch gekennzeichnet, daß jede der zweiten Rippen (13a, 13b) mit einem abgebogenen Bereich (18) versehen ist, der sich derart nach außen erstreckt, daß der Abstand ($l_1$) zwischen den nach außen gerichteten Enden eines jeden abgebogenen Bereichs (18) im wesentlichen

gleich der Entfernung ($l_2$) zwischen beiden abgebogenen Enden (17a) der magnetischen Abschirmplatte (17) ist.

4. Magnetbandkassette nach Anspruch 3, dadurch gekennzeichnet, daß jede der Kombinationen einer zweiten Rippe (13a, 13b) und eines abgebogenen Bereichs (18) eine im wesentlichen L-förmige Ausbildung hat.

5. Magnetbandkassette nach Anspruch 3, dadurch gekennzeichnet, daß die zweiten Rippen (13a, 13b) und die abgebogenen Bereiche (18) an ihren oberen Ecken keilförmige Bereiche aufweisen.

**Revendications**

1. Cassette de bande magnétique d'enregistrement comprenant

un boîtier inférieur (1b) et un boîtier supérieur (1a) assemblés l'un sur l'autre par un dispositif de fixation (1c) afin qu'ils forment une chambre de logement de bande ayant plusieurs orifices sur la face avant de la chambre,

une bande magnétique (7) d'enregistrement enroulée autour de deux bobines (6a, 6b) montées dans la chambre afin qu'elles puissent tourner, la partie intermédiaire de la bande d'enregistrement (7) étant tendue entre les bobines (8a, 8b) et passant suivant un trajet prédéterminé délimité le long des orifices,

une paire d'axes (9a, 9b) de guidage de bande dépassant du boîtier inférieur (1b) dans des positions adjacentes aux deux côtés de l'un (3) des orifices par lequel une tête d'enregistrement d'un appareil de lecture de bande est introduite,

une plaque (17) de blindage magnétique ayant une partie de forme générale allongée et deux extrémités (17a, 17b) repliées perpendiculairement à la partie allongée, la plaque (17) étant placée dans une partie interne de la chambre de logement de bande, la partie allongée de la plaque étant disposée parallèlement au trajet de la bande afin qu'elle soit tournée vers l'orifice (3) d'introduction d'une tête d'enregistrement, chaque extrémité repliée (17a, 17b) de la plaque de blindage magnétique (17) étant montée sur une pièce correspondante (19a, 19b) de base, les deux pièces de base ayant une longueur prédéterminée et dépassant de la base de part et d'autre de l'orifice (3) d'introduction de tête d'enregistrement,

un dispositif (10) à patin comprenant une plaque allongée et élastique (11) et un bloc (12) d'amortissement fixé à la partie centrale de la plaque élastique (11), cette dernière étant introduite dans l'espace correspondant délimité par la plaque (17) de blindage magnétique et l'axe correspondant (9a, 9b) de guidage de bande d'une manière telle que le dispositif à patin (10) est disposé parallèlement à la plaque de blindage magnétique (17), le dispositif à patin (10) étant monté sur les pièces correspondantes de base,

une paire de premières nervures (13c, 13d) disposées au moins sur le boîtier inférieur des deux côtés de l'orifice (3) d'introduction de tête d'enregistrement et ayant des parties avant destinées à régler la hauteur de la bande magnétique (7) d'enregistrement par support du bord inférieur de cette bande magnétique afin qu'elle puisse glisser,

caractérisée en ce qu'elle comporte une paire de secondes nervures (13a, 13b) adjacentes aux pièces de base (19a, 19b), chacune des secondes nervures (13a, 13b) ayant une hauteur telle qu'elle ne dépasse pas la face supérieure des pièces de base (19a, 19b) mais dépasse la face supérieure des premières nervures (13c, 13d) et chacune des secondes nervures (13a, 13b) part au moins d'une position qui se trouve en avant des bords arrière des pièces de base (19a, 19b) et se termine au moins dans une position adjacente au bord avant de la plaque (17) de blindage magnétique.

2. Cassette de bande magnétique d'enregistrement selon la revendication 1, caractérisée en ce que chacune des secondes nervures (13a, 13b) est réalisée sous forme solidaire de la première nervure correspondante afin qu'elle règle le niveau de la bande (7) d'enregistrement se déplaçant le long dudit trajet.

3. Cassette de bande magnétique d'enregistrement selon la revendication 2, caractérisée en ce que chacune des secondes nervures (13a, 13b) a une partie repliée (18) dépassant vers l'extérieur d'une manière telle que la distance ($l_1$) séparant les extrémités externes des parties repliées (18) es pratiquement égale à la distance ($l_2$) séparant les extrémités repliées (17a) de la plaque (17) de blindage magnétique.

4. Cassette de bande magnétique d'enregistrement selon la revendication 3, caractérisée en ce que chacune des combinaisons comprenant une seconde nervure (13a, 13b) et une partie repliée (18) a une configuration générale en L.

5. Cassette de bande magnétique d'enregistrement selon la revendication 3, caractérisée en ce que les secondes nervures (13a, 13b) et les parties repliées (18) ont des parties inclinées à leurs coins supérieurs.

*Fig. 1*

*Fig. 3*

Fig. 2

Fig. 4

*Fig. 5* (PRIOR ART)

*Fig. 6* (PRIOR ART)